# EUROPEAN PATENT APPLICATION

(11) **EP 4 181 033 A1**
(43) Date of publication of application: **17.05.2023**
(21) Application number: 21837591.3
(22) Date of filing: 24.05.2021
(51) Int. Cl.: G06N 20/00

(54) **INFORMATION PROCESSING METHOD AND INFORMATION PROCESSING SYSTEM**

(30) Priority: 10.07.2020 JP 2020119086
(71) Applicant: Panasonic Intellectual Property Management Co., Ltd., Osaka-shi, Osaka 540-6207 (JP)
(72) Inventor: NAKATA, Yohei, Chuo-ku, Osaka-shi, Osaka 540-6207 (JP); ISHII, Yasunori, Chuo-ku, Osaka-shi, Osaka 540-6207 (JP)
(74) Representative: Novagraaf International SA
(86) International application number: PCT/JP2021/019554
(87) International publication number: WO 2022/009543

(57) **Abstract**

An information processing method includes: inputting sensing data into a first inference model to obtain a feature map that is a first inference result of the sensing data from the first inference model (S2002); inputting the first inference result into a third inference model to obtain, from the third inference model, model selection information indicating at least one second inference model that is selected from among a plurality of second inference models (S2003); inputting the first inference result into the at least one second inference model indicated by the model selection information to obtain, from the at least one second inference model, at least one second inference result of the first inference result, and outputting the at least one second inference result (S2005).

## Description

### [Technical Field]

The present invention relates to an information processing method and an information processing system.

### [Background Art]

There is a technique for executing inference processing based on data obtained from a device (see Patent Literature 1). The literature discloses selection of an inference model that executes inference processing based on an environment around or a condition of the device.

### [Citation List]

### [Patent Literature]

[PTL 1] PCT International Publication No. 2018/173121

### [Summary of Invention]

### [Technical Problem]

However, in the above-described literature, an inference model is selected based on indirect information about data that is obtained from the device, and thus an inference model suitable for the data which is the inference processing target (in other words, data that is input to the inference model) may not be selected.

In view of this, the present invention provides an information processing method and the like which make it possible to increase the possibility that an inference model suitable for data which is the inference processing target is selected.

### [Solution to Problem]

An information processing method according to an aspect of the present invention is an information processing method that a processor executes using memory. The information processing method includes: inputting sensing data into a first inference model to obtain a first inference result of the sensing data from the first inference model; inputting the first inference result into a third inference model to obtain, from the third inference model, model selection information indicating at least one second inference model that is selected from among a plurality of second inference models; inputting the first inference result into the at least one second inference model indicated by the model selection information to obtain, from the at least one second inference model, at least one second inference result of the first inference result; and outputting the at least one second inference result.

It is to be noted that, these general and specific aspects may be implemented using, a system, a device, an integrated circuit, a computer program, or a computer readable medium such as a CD-ROM, or any combination of, systems, devices, integrated circuits, computer programs, or computer readable media.

### [Advantageous Effects of Invention]

The information processing method according to the present invention makes it possible to increase the possibility that an inference model suitable for data which is the inference processing target is selected.

### [Brief Description of Drawings]

[FIG. 1]

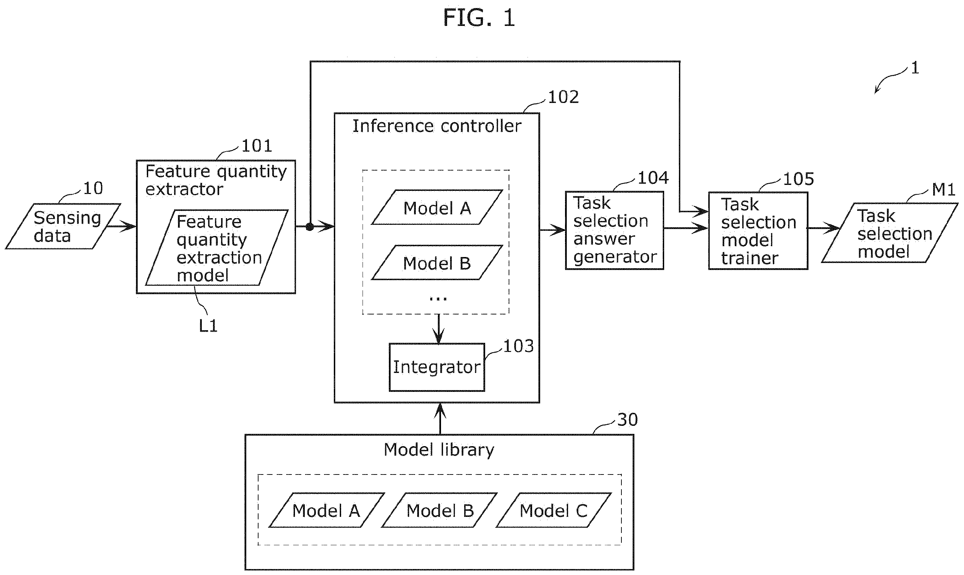

   FIG. 1 is a block diagram illustrating a functional configuration of a training system according to Embodiment 1.
[FIG. 2]

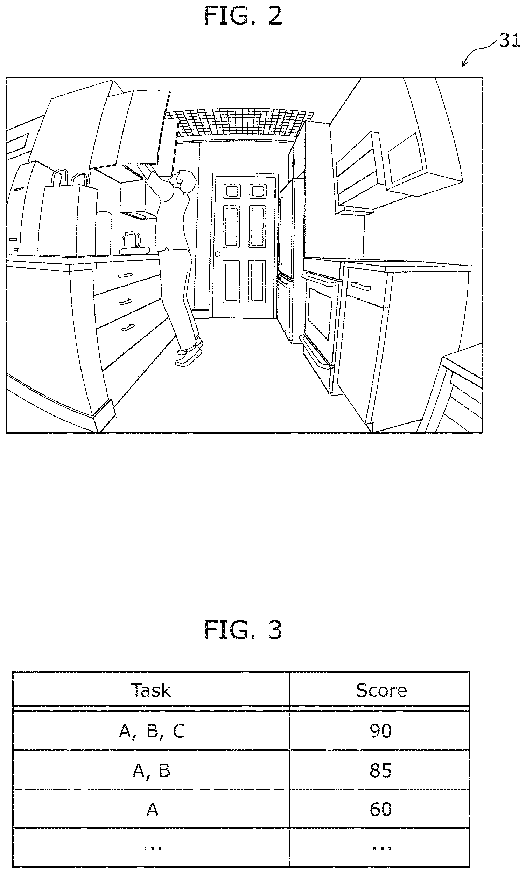

   FIG. 2 is an illustration of one example of an image that is input to the training system according to Embodiment 1.
[FIG. 3]
   FIG. 3 is an illustration of one example of task evaluation information according to Embodiment 1.
[FIG. 4]

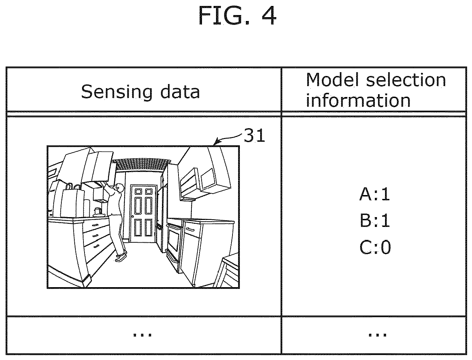

   FIG. 4 is an illustration of one example of training data according to Embodiment 1.
[FIG. 5]

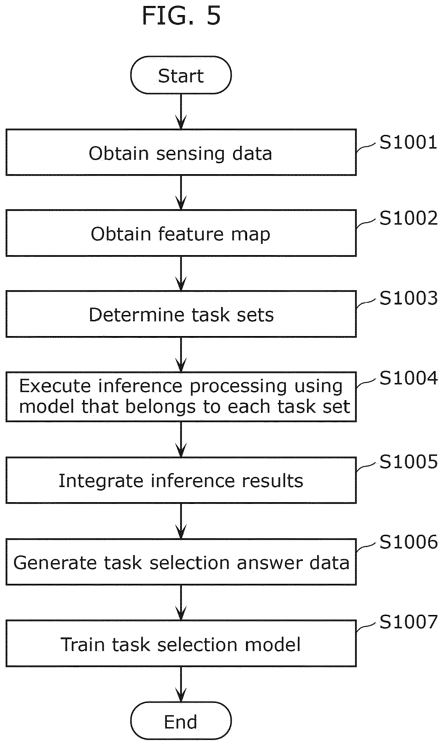

   FIG. 5 is a flow chart indicating processing that is executed by the training system according to Embodiment 1.
[FIG. 6]

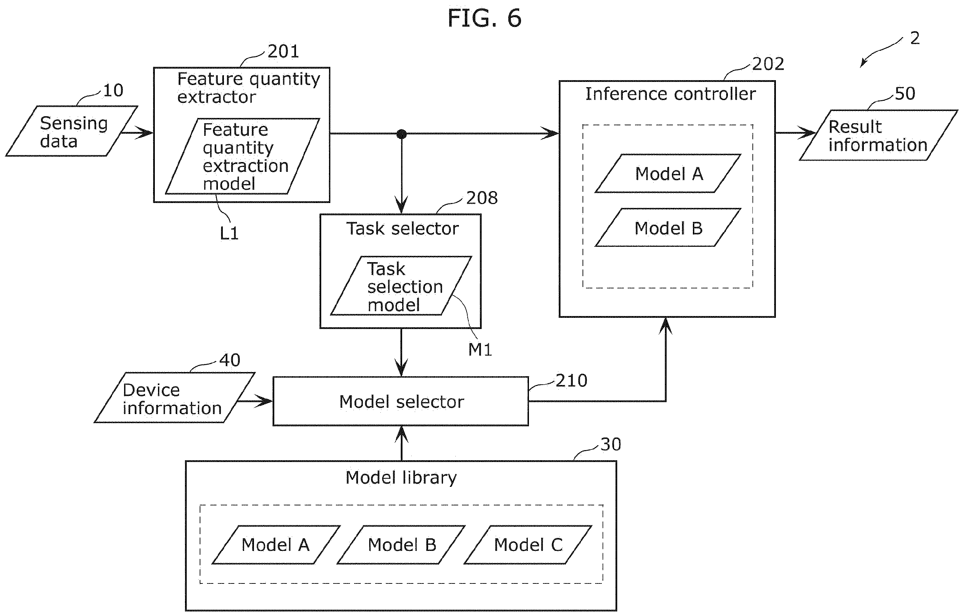

   FIG. 6 is a block diagram illustrating a functional configuration of an inference system according to Embodiment 1.
[FIG. 7]

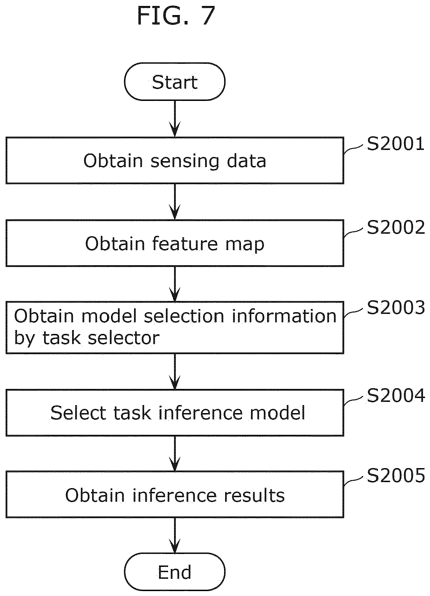

   FIG. 7 is a flow chart indicating processing that is executed by the inference system according to Embodiment 1.
[FIG. 8]

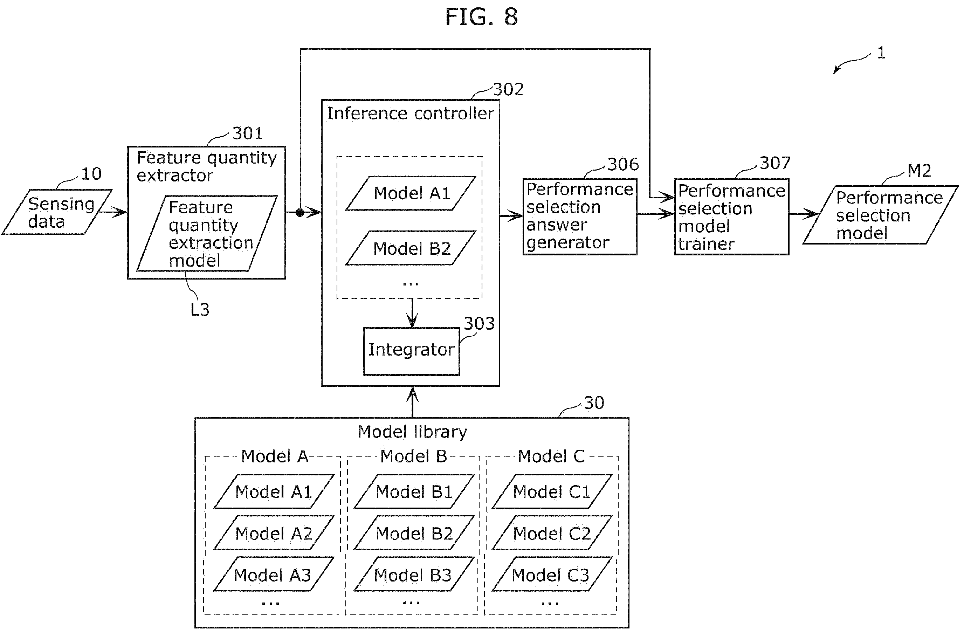

   FIG. 8 is a block diagram illustrating a functional configuration of a training system according to Embodiment 2.
[FIG. 9]

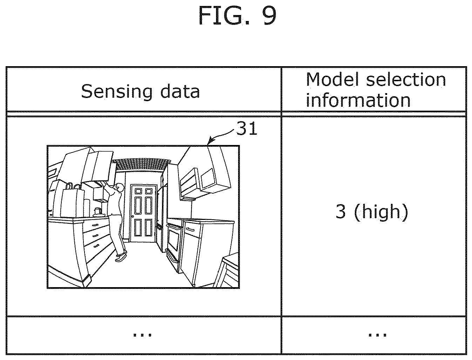

   FIG. 9 is an illustration of an example of training data according to Embodiment 2.
[FIG. 10]

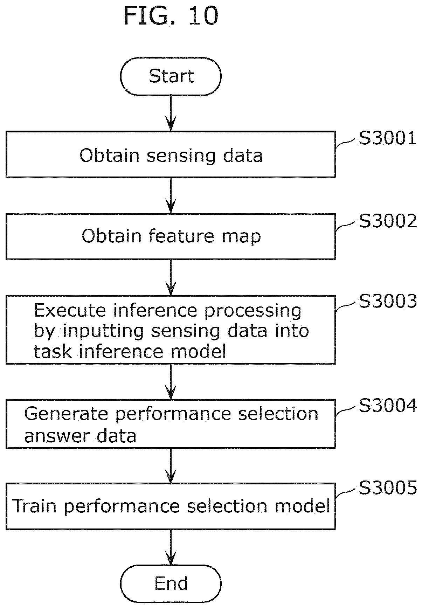

   FIG. 10 is a flow chart indicating processing that is executed by the training system according to Embodiment 2.
[FIG. 11]

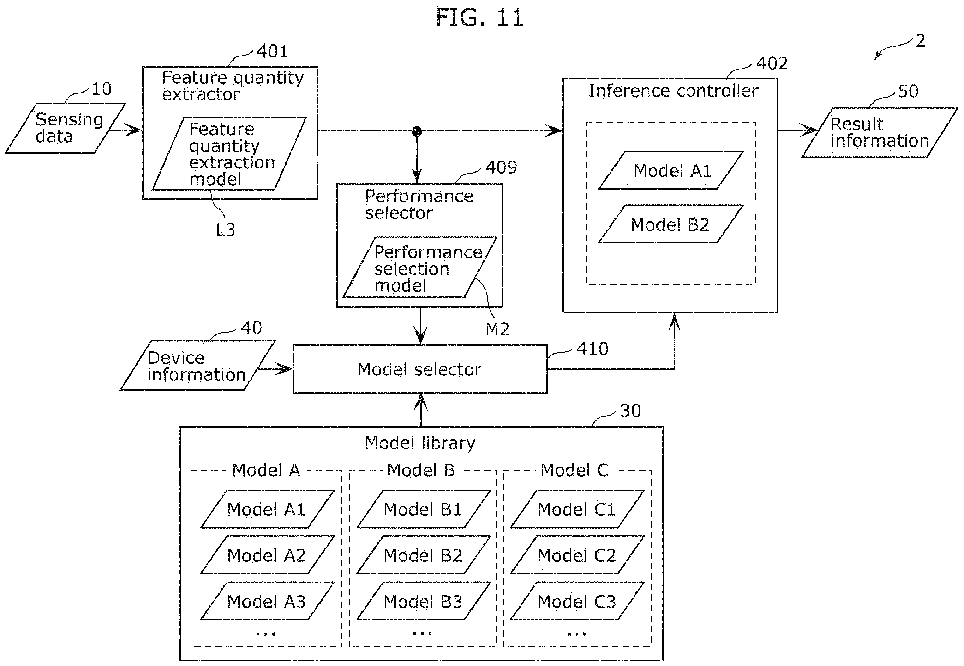

   FIG. 11 is a block diagram illustrating a functional configuration of an inference system according to Embodiment 2.
[FIG. 12]

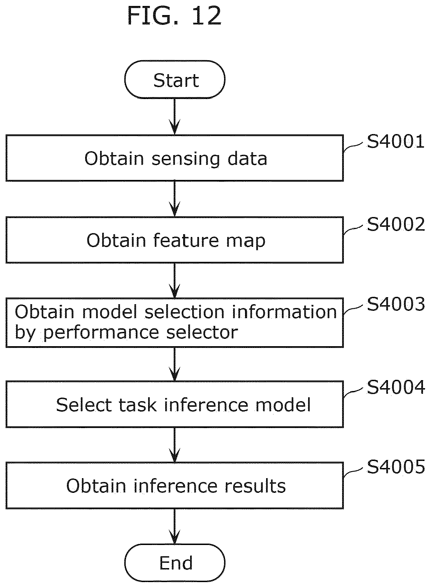

   FIG. 12 is a flow chart indicating processing that is executed by the inference system according to Embodiment 2.
[FIG. 13]

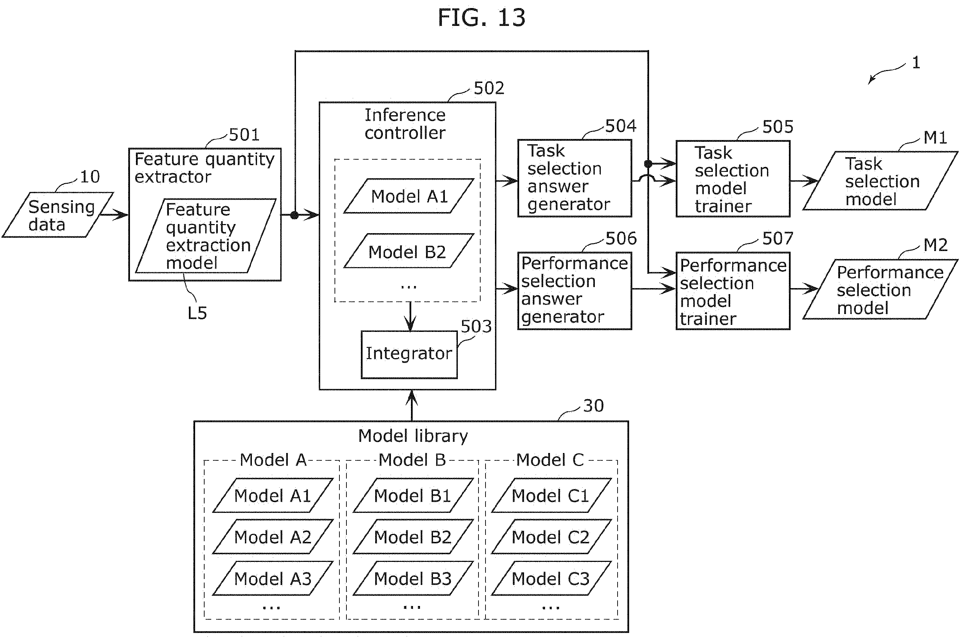

   FIG. 13 is a block diagram illustrating a functional configuration of a training system according to Embodiment 3.
[FIG. 14]

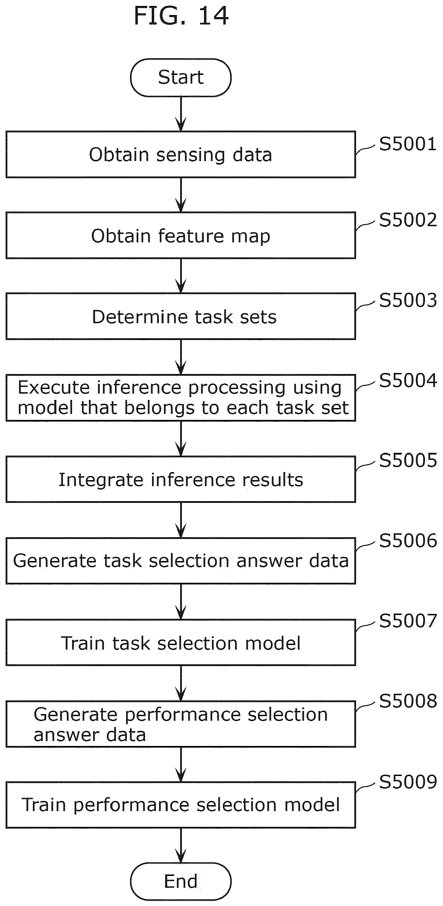

   FIG. 14 is a flow chart indicating processing that is executed by the training system according to Embodiment 3.
[FIG. 15]

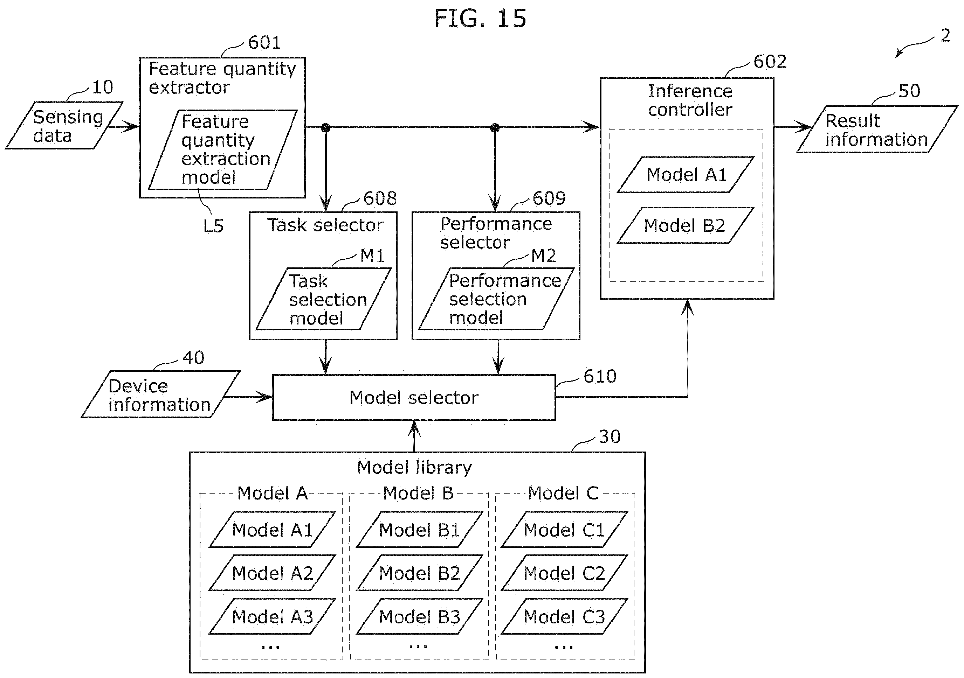

   FIG. 15 is a block diagram illustrating a functional configuration of an inference system according to Embodiment 3.
[FIG. 16]

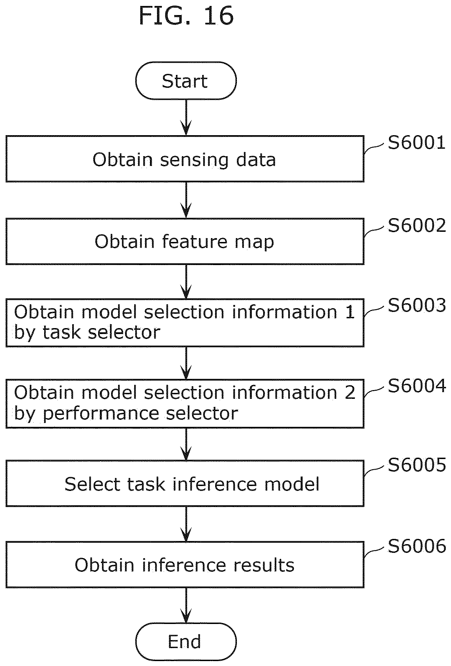

   FIG. 16 is a flow chart indicating processing that is executed by the inference system according to Embodiment 3.
[FIG. 17]

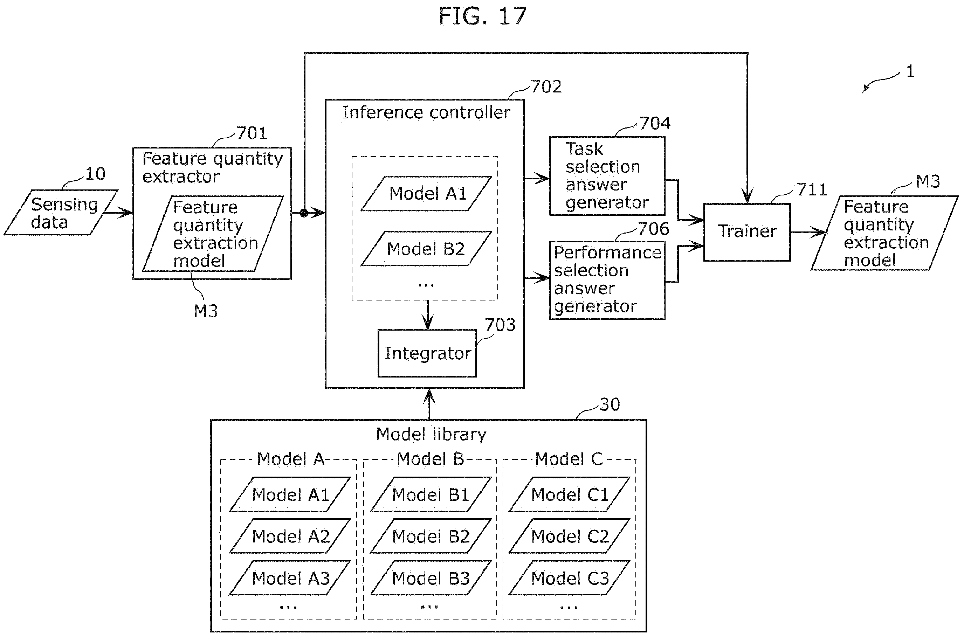

   FIG. 17 is a block diagram illustrating a functional configuration of a training system according to Embodiment 4.
[FIG. 18]

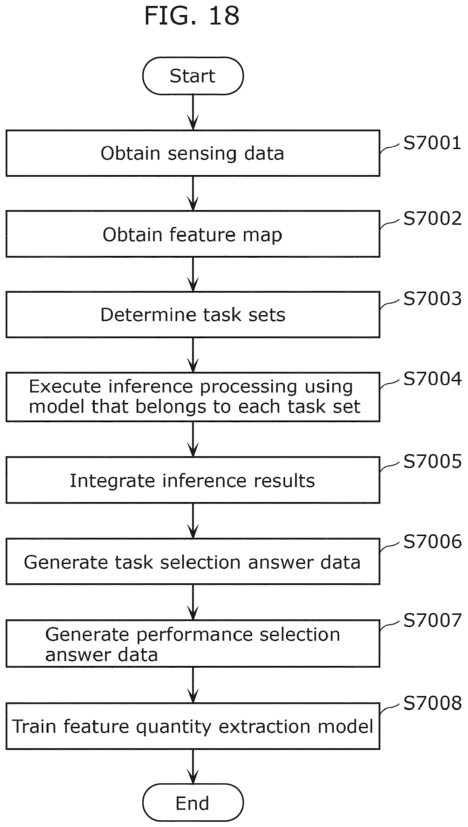

   FIG. 18 is a flow chart indicating processing that is executed by the training system according to Embodiment 4.
[FIG. 19]

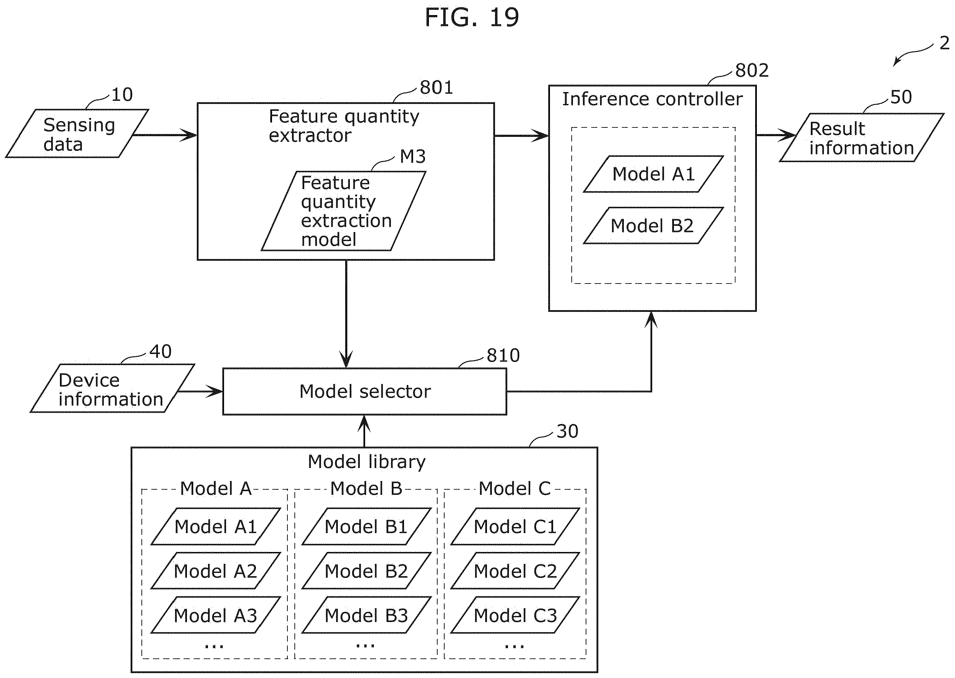

   FIG. 19 is a block diagram illustrating a functional configuration of an inference system according to Embodiment 4.
[FIG. 20]

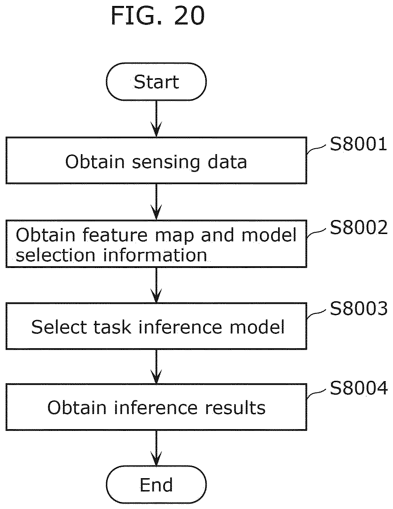

   FIG. 20 is a flow chart indicating processing that is executed by the inference system according to Embodiment 4.

### [Description of Embodiments]

### (Underlaying Knowledge Forming Basis of the Present Invention)

In recent years, with advancement in inference processing technology using machine learning etc., cases in which inference processing is applied have expanded. For example, inference processing is used for behavior recognition of a human at home. On the other hand, objects or scenes of various kinds or having various degrees of recognition difficulty are present in behavior recognition. In addition, reduction in size and cost of apparatuses which perform recognition processing is required for behavior recognition at home, and calculation resources of the apparatuses are limited. For this reason, it is required to recognize various recognition targets using limited calculation resources (for example, processors and memory) in bahavior recognition at home. It is assumed that the same applies not only to behavior recognition but also to other inference processing.

However, recognition processing needs to be executed using many kinds of behavior recognition models in order to handle various kinds of recognition targets, which requires an enormous amount of calculation cost. In addition, recognition processing needs to be executed using huge behavior recognition models in order to handle recognition targets having various degrees of recognition difficulty, which requires an enormous amount of calculation cost (such as, a calculation amount, calculation time, an occupancy of a calculation resource, power consumption).

In addition, there is a conventional technique for selecting an inference model that executes inference processing based on an environment around or a condition of a device.

In the technique, however, an inference model is selected based on indirect information about data that is obtained from the device, and thus an inference model suitable for the data that is the inference processing target may not be selected. In addition, selection processing and inference processing of the inference model are executed independently, which requires additional calculation cost.

An information processing method according to an aspect of the present invention is an information processing method that a processor executes using memory. The information processing method includes: inputting sensing data into a first inference model to obtain a first inference result of the sensing data from the first inference model; inputting the first inference result into a third inference model to obtain, from the third inference model, model selection information indicating at least one second inference model that is selected from among a plurality of second inference models; inputting the first inference result into the at least one second inference model indicated by the model selection information to obtain, from the at least one second inference model, at least one second inference result of the first inference result; and outputting the at least one second inference result.

According to the above aspect, since the second inference result is obtained using the at least one second inference model that is selected from among the plurality of second inference models, any other unselected second inference model among the plurality of second inference models does not operate at the time when obtaining the second inference result. For this reason, it is possible to reduce the amount of the calculation resource or the electric power required for the operation of the unselected second inference model. In this way, the above-described information processing method makes it possible to reduce the calculation cost required for the inference processing while enabling inference processing of various inference targets. In addition, the second inference model is selected based on the first inference result obtained by inputting the sensing data, the second inference model is selected substantially based on a feature of the sensing data. Accordingly, it is possible to increase the possibility that an inference model suitable for data which is the inference processing target is selected.

For example, the third inference model may be a model which: inputs training sensing data into the first inference model to obtain, from the first inference model, a training first inference result of the training sensing data; and has been trained using machine learning, based on at least one training second inference result and training model selection information. The at least one training second inference result is obtained by inputting, for each of the at least one second inference model that is selected from among the plurality of second inference models according to a corresponding one of selection patterns, the training first inference result into the at least one second inference model selected. The training model selection information is the model selection information obtained by inputting the training first inference result into the third inference model.

According to the above aspect, the use of machine learning makes it easier, than in any other method, to generate the third inference model that performs complex inference processing of selecting the second inference model based on a feature of the sensing data.

For example, training of the third inference model may include training using machine learning in which data generated according to a format of the model selection information based on the at least one training second inference result is reference data and the training model selection information is output data.

According to the above aspect, it is possible to train the third inference model without restriction on the format of the training second inference result by generating the data according to the format of the model selection information based on the training second inference result. In other words, it is possible to apply various second inference models which output various second inference results to any of embodiments of the present disclosure.

For example, the model selection information may include first information corresponding to a task that a second inference model executes, the at least one second inference model indicated by the model selection information may execute the task corresponding to the first information, and the information processing method may further include generating the reference data in such a manner that a second inference model that executes a task which has contributed to the at least one training second inference result is preferentially included in the at least one second inference model indicated by the training model selection information.

According to the above aspect, since the second inference model that executes the task that has contributed to the at least one second inference result is preferentially included in the training model selection information as the reference data at the time of the machine learning, it is possible to automatically generate the third inference model which outputs the model selection information based on which the second inference model which executes the task is selected. In addition, effective data for the training of the third inference model among data included in the reference data increases, which increases the efficiency of the training.

For example, wherein the generating of the reference data may include generating the reference data in such a manner that a second inference model that executes a task belonging to a task set having a score higher than a threshold value is preferentially included in the at least one second inference model indicated by the training model selection information. The score is based on the at least one training second inference result.

According to the above aspect, since the second inference model that executes the task belonging to the task set having the score higher than the threshold value is preferentially included in the training model selection information as the reference data at the time of the machine learning, it is possible to approximate the level of the precision, accuracy, or the like of the second inference result by the second inference model that is substantially selected by the third inference model to a predetermined level.

For example, the model selection information may include second information corresponding to a performance of the at least one second inference model, the at least one second inference model indicated by the model selection information may have a performance corresponding to the second information, and the generating of the reference data may include generating the reference data in such a manner that a second inference model that satisfies a performance requirement in the at least one training second inference result is preferentially included in the at least one second inference model indicated by the training model selection information.

According to the above aspect, the second inference model that satisfies the performance requirement is preferentially included in the training model selection information as the reference data at the time of the machine learning, which makes it possible to automatically generate the third inference model which outputs the model selection information based on which the second inference model that satisfies the performance requirement is selected. In addition, effective data for the training of the third inference model among data included in the reference data increases, which increases the efficiency of the training.

For example, the second information may include a degree of difficulty of processing of the at least one second inference model, and the generating of the reference data may include generating the reference data in such a manner that a second inference model that has a performance according to the degree of difficulty is preferentially included in the at least one second inference model indicated by the training model selection information.

According to the above aspect, since the second inference model having the performance according to the degree of difficulty is preferentially included in the training model selection information as the reference data at the time of the machine learning, it is possible to approximate the level of the processing performance (in other words, the calculation cost) by the second inference model that is substantially selected by the third inference model to a desired level.

For example, the at least one second inference model may include a neural network model, the second information may include size information indicating a size of the neural network model, as the performance of the at least one second inference model, and the generating of the reference data may include generating the reference data in such a manner that a second inference model that has the size information included in the second information is preferentially included in the at least one second inference model indicated by the training model selection information.

According to the above aspect, since the size information of the neural network is used as information indicating the performance of the second inference model, the performance of the second inference model can be adjusted more easily.

An information processing method according to an aspect of the present invention is an information processing method that a processor executes using memory. The information processing method includes: inputting sensing data into a first inference model to obtain, from the first inference model, a first inference result of the sensing data and model selection information indicating at least one second inference model that is selected from among a plurality of second inference models; inputting the first inference result into the at least one second inference model indicated by the model selection information to obtain, from the at least one second inference model, at least one second inference result of the first inference result; and outputting the at least one second inference result.

According to the above aspect, since the second inference result is obtained using the at least one second inference model that is selected from among the plurality of second inference models, any second inference model that is not selected among the plurality of second inference models does not operate when obtaining the second inference result. For this reason, it is possible to reduce the calculation resource or the electric power required for the operation of the unselected second inference model. In this way, the above-described information processing method makes it possible to reduce the calculation cost required for the inference processing while enabling inference processing of various inference targets. In addition, since the second inference model is selected substantially based on the sensing data, it is possible to increase the possibility that the inference model suitable for the data that is the inference processing target is selected.

For example, the first inference model may be a model which: inputs training sensing data into the first inference model to obtain, from the first inference model, a training first inference result of the training sensing data and training model selection information; and has been trained using machine learning based on at least one training second inference result and the training model selection information. The at least one training second inference result is obtained by inputting, for each of the at least one second inference model that is selected from among the plurality of second inference models according to a corresponding one of selection patterns, the training first inference result into the at least one second inference model selected.

According to the above aspect, the use of machine learning makes it easier, than in any other method, to generate, as the first inference model, the inference model that performs complex inference processing of selecting the second inference model based on a feature of the sensing data.

For example, training of the first inference model may include training using machine learning in which data generated according to a format of the model selection information based on the at least one training second inference result is reference data and the training model selection information is output data.

According to the above aspect, it is possible to train the first inference model without restriction on the format of the training second inference result by generating the data according to the format of the model selection information based on the training second inference result. In other words, it is possible to apply various second inference models which output various second inference results to one or more embodiments of the present disclosure.

For example, the model selection information may include first information corresponding to a task that a second inference model executes, the at least one second inference model indicated by the model selection information may execute the task corresponding to the first information, and the information processing method may further include generating the reference data in such a manner that a second inference model that executes a task which has contributed to a result of the at least one training model second selection information is preferentially included.

According to the above aspect, since the second inference model which executes the task that has contributed to the at least one second inference result is preferentially included in the training model selection information as the reference data at the time of the machine learning, it is possible to automatically generate the first inference model which outputs the model selection information based on which the second inference model which executes the task is selected. In addition, effective data for the training of the first inference model with respect to data included in the reference data increases, which increases the efficiency of the training.

For example, the generating of the reference data may include generating the reference data in such a manner that a second inference model that executes a task belonging to a task set having a score higher than a threshold value is preferentially included in the at least one second inference model indicated by the training model selection information. The score is based on the at least one training second inference result.

According to the above aspect, since the second inference model that executes the task belonging to the task set having the score higher than the threshold value is preferentially included in the training model selection information as the reference data at the time of the machine learning, it is possible to approximate the level of the precision, accuracy, or the like of the second inference result by the second inference model that is substantially selected by the first inference model to a predetermined level.

For example, the model selection information may include second information corresponding to a performance of the at least one second inference model, the at least one second inference model indicated by the model selection information may have a performance corresponding to the second information, and the generating of the reference data may include generating the reference data in such a manner that a second inference model that satisfies a performance requirement in the at least one training second inference result is preferentially included in the at least one second inference model indicated by the training model selection information.

According to the above aspect, the second inference model that satisfies the performance requirement is preferentially included in the training model selection information as the reference data at the time of the machine learning, which makes it possible to automatically generate the first inference model which outputs the model selection information based on which the second inference model that satisfies the performance requirement is selected. In addition, effective data for the training of the first inference model with respect to data included in the reference data increases, which increases the efficiency of the training.

For example, the second information may include a degree of difficulty of processing of the at least one second inference model, and the generating of the reference data may include generating the reference data in such a manner that a second inference model that has a performance according to the degree of difficulty is preferentially included in the at least one second inference model indicated by the training model selection information.

According to the above aspect, since the second inference model having the performance according to the degree of difficulty is preferentially included in the training model selection information as the reference data at the time of the machine learning, it is possible to approximate the level of the processing performance (in other words, the calculation cost) by the second inference model that is substantially selected by the first inference model to a desired level.

For example, the at least one second inference model may include a neural network model, the second information may include size information indicating a size of the neural network model, as the performance of the at least one second inference model, and the generating of the reference data may include generating the reference data in such a manner that a second inference model that has the size information included in the second information is preferentially included in the at least one second inference model indicated by the training model selection information.

According to the above aspect, since the size information of the neural network is used as the performance of the second inference model, the performance of the second inference model can be adjusted more easily.

An information processing system according to an aspect of the present invention is an information processing system including: a first obtainer which inputs sensing data into a first inference model to obtain a first inference result of the sensing data from the first inference model; a second obtainer which inputs the first inference result into a third inference model to obtain, from the third inference model, model selection information indicating at least one second inference model that is selected from among a plurality of second inference models; a third obtainer which inputs the first inference result into the at least one second inference model indicated by the model selection information to obtain, from the at least one second inference model, at least one second inference result of the first inference result; and an outputter which outputs the at least one second inference result.

According to the above aspect, effects similar to those in the above-described information processing method are provided.

An information processing system according to an aspect of the present invention is an information processing system including: a first obtainer which inputs sensing data into a first inference model to obtain, from the first inference model, a first inference result of the sensing data and model selection information indicating at least one second inference model that is selected from among a plurality of second inference models; a second obtainer which inputs the first inference result into the at least one second inference model indicated by the model selection information to obtain, from the at least one second inference model, at least one second inference result of the first inference result; and an outputter which outputs the at least one second inference result.

According to the above aspect, effects similar to those in the above-described information processing method are provided.

It is to be noted that, these general and specific aspects may be implemented using, a system, a device, an integrated circuit, a computer program, or a computer readable medium such as a CD-ROM, or any combination of, systems, devices, integrated circuits, computer programs, or computer readable media.

Hereinafter, embodiments are specifically described with reference to the drawings.

It is to be noted that each of the embodiments described below indicates a general or specific example. The numerical values, shapes, materials, constituent elements, the arrangement and connection of the constituent elements, etc., indicated in the following embodiments are mere examples, and do not limit the scope of the present invention. Among the constituent elements in the following embodiments, constituent elements that are not recited in any of the independent claims which define the most generic concept of the present disclosure are described as optional constituent elements.

### [Embodiment 1]

This embodiment describes an information processing method and an information processing system which cause inference models to operate efficiently. Hereinafter, the information processing method is also simply referred to as a processing method, and the information processing system is also simply referred to as a processing method.

This embodiment describes training system 1 and inference system 2. Training system 1 is a processing system for training, by machine learning, a selection model for selecting an inference model that is used for inference processing of input sensing data. Inference system 2 is a processing system for executing inference processing of the sensing data using the inference model that is selected using the task selection model which has been trained by training system 1, according to the input sensing data. Hereinafter, training system 1 and inference system 2 are described in sequence.

### (1-1) Training System 1

FIG. 1 is a block diagram illustrating a configuration of training system 1 which is a processing system in this embodiment.

As illustrated in FIG. 1, training system 1 outputs an inference model (task selection model M1) for selecting an inference model which executes inference processing of sensing data 10, based on input sensing data 10.

Training system 1 includes feature quantity extractor 101, inference controller 102, integrator 103, task selection answer generator 104, task selection model trainer 105, and model library 30. Each of the functional units of training system 1 can be implemented by means of a processor (for example, a central processing unit (CPU)) (not illustrated) executing a predetermined program using memory. It is to be noted that training system 1 may be implemented as one apparatus, or may be implemented by a plurality of apparatuses which can communicate with each other.

Feature quantity extractor 101 is a functional unit which extracts a feature quantity (a first inference result) of sensing data 10 using feature quantity extraction model L1 (first inference model). Feature quantity extractor 101 extracts the feature quantity of sensing data 10 by inputting input sensing data 10 into feature quantity extraction model L1. For example, the feature quantity may be a feature map. The generated feature map is provided to inference controller 102. The feature quantity model is, for example, a neural network model which has been trained to output a feature map of input data.

Sensing data 10 is image data, for example. The following description is given of a case in which sensing data 10 is image data as a non-limiting example. Sensing data 10 available as answer data can be used. Examples of answer data include: sound data that is output from a microphone; point cloud data that is output from a radar such as a light detection and ranging (LiDAR), pressure data that is output from a pressor sensor, temperature data or humidity data that is output from a temperature sensor or a humidity sensor, and scent data that is output from a scent sensor.

Inference controller 102 is a functional unit which controls inference by inference processing in which a feature map using at least one task inference model (second inference model) is used as an input. The task inference model is a model for inferring information about an object, a human, or the like included in an image which is sensing data 10 according to the feature map which has been input.

Inference controller 102 obtains the feature map from feature quantity extractor 101. In addition, inference controller 102 executes inference processing using a plurality of task inference models held by model library 30. The plurality of task inference models include task inference models for executing various tasks. Here, although a description is given assuming that the tasks include task A for object detection, task B for posture estimation, and task C for attribute determination, the tasks are not limited thereto.

For example, task A for object detection is a task for detecting one or more objects (for example, a lighting device, a shelf, a drawer, a bag, and/or the like, the objects may include a human) captured in an image which is input sensing data 10. For example, task B for posture estimation is a task for estimating a posture (for example, standing, stretching out, being seated, etc.) of a human captured in the image. For example, task C for attribute determination is a task for determining an attribute of a state (for example, indicating that the place is a kitchen, the period of time corresponds to morning, or the like) captured in the image.

Inference controller 102 determines at least one task (also referred to as a task set) that is selected from among the plurality of tasks. Inference controller 102 also selects a new task set that is at least partly different from the above task set from among the plurality of tasks, and determines the new task set. In this way, inference controller 102 determines the plurality of task sets. Inference controller 102 may determine all the task sets that can be selected from among the plurality of tasks, as the plurality of task sets.

Inference controller 102 inputs the feature map into each of the task inference models for executing each of the one or more tasks included in the task set selected from among the plurality of task sets determined, and executes inference processing. Inference controller 102 integrates, by integrator 103, inference results (second inference results) that are output by the respective task inference models, thereby obtaining integration information. Inference controller 102 obtains integration information about the plurality of task sets determined.

Integrator 103 is a functional unit which executes integration processing based on at least one inference result and outputs integration information. In other words, when at least one inference result is input, integrator 103 generates an item of integration information in which at least one inference result which has been input is integrated. Integrator 103 obtains the result of inference by at least one task inference model held by model library 30 as the at least one inference result. Integration information includes a task set and a pair of a state (or a behavior) that is inferred based on sensing data 10 and a score indicating a likelihood of the state. When there are a plurality of states, integration information includes a plurality of pairs of states and scores. It is to be noted that, when a task set includes only one task, integrator 103 generates integration information including the result of inference that is output by the task inference model which executes the one task. Integrator 103 can be implemented using a neural network model. Specifically, integrator 103 can be implemented by a neural network which has been trained so as to, when the at least one input inference result is input, output the integration information indicating the task set and the pair of the state and the score. Inference controller 102 provides task selection answer generator 104 with the integration information generated. It is to be noted here that a description is given of an example in which the integration processing by integrator 103 is processing for solving a classification problem (in other words, the state included in the integration information is a classification result), integration processing is not limited thereto. For example, processing by integrator 103 may be a regression problem, processing for solving an object detection problem, or the like. In addition, when integrator 103 performs processing of only a single state, the integration information may not include the state. It is to be noted that the integration processing in integrator 103 may be performed by a machine learning model.

Here, generation of integration information is specifically described with reference to FIG. 2. FIG. 2 is an illustration of one example of an image that is input to training system 1 according to this embodiment.

As illustrated in FIG. 2, image 20 input to training system 1 is an image of a scene in which a human is working.

Specifically, image 20 is an image of a scene in which a human stands in a system kitchen in a home. A shelf having a door is present in the vicinity of a ceiling of the system kitchen. A bag is placed on a worktop of the system kitchen. The human opens the door of the shelf in the vicinity of the ceiling of the kitchen and is trying to house an article on the shelf.

For example, when executing, on image 20, detection processing by task A for object detection, the human, the shelf, the door, etc., can be detected. When executing, on image 20, estimation processing by task B for posture estimation, a fact that the human is standing, the human is stretching out, or the like can be estimated. When executing, on image 20, determination processing by task C for attribute determination, a fact that the place is the kitchen, or the like can be determined.

When the results of the processing by tasks A, B, and C as described above are integrated, for example, integration information including the set of tasks A, B, and C, a state where "the human is stretching out to reach and get an object", and score 90 associated with the state is generated. In addition, when the results of the processing by tasks A and B as described above are integrated, integration information including the set of tasks A and B, a state where "the human stands up and is trying to house an object into a shelf", and score 60 associated with the state is generated.

Task selection answer generator 104 is a functional unit which generates answer data for use in training of a task selection model (the answer data is hereinafter also referred to as task selection answer data, or, as a generic concept, answer data of model selection information). Task selection answer data is answer data (reference data) for training task selection model so that a task is selected. The task is the task that should be executed on sensing data 10 which has been input to feature quantity extractor 101 among the plurality of tasks regarding a model held by model library 30. Task selection answer generator 104 obtains integration information from inference controller 102, and generates task selection answer data based on the integration information. Specifically, task selection answer generator 104 generates the task selection answer data, based on the task set and the score included in the integration information. When the integration information includes a plurality states each of which is associated with a corresponding one of sets of task sets and scores (each set associated with the state is hereinafter also referred to as a set of a task set and a score) are selected from the integration information, and task selection answer data is generated based on the obtained set of a task set and a score. When the integration information includes a single state, task selection answer data is generated based on the set of a task set and a score included in the integration information is generated.

The task selection answer data is generated in such a manner that, for example, a task inference model which executes a task which has contributed to the at least one second inference result is preferentially included in the at least one task inference model indicated by the training model selection information. More specifically, the task selection answer data is generated in such a manner that the task inference model which executes the task belonging to the task set whose score based on the result of the inference by the at least one task inference model is higher than a threshold value is preferentially included in the at least one task inference model.

FIG. 3 is an illustration of one example of sets of task sets and scores according to this embodiment. FIG. 3 illustrates a case where the sets of task sets and scores respectively associated with particular states are obtained.

The uppermost set in FIG. 3 indicates (i) a task set of tasks A, B, and C, and (ii) score 90 corresponding to the state obtained by inputting a feature map into a task inference model which executes each of the tasks included in the task set and by means of integrator 103 integrating the inference results which have been output.

Likewise, the second set from above in FIG. 3 indicates (i) a task set of tasks A and B and (ii) score 85 corresponding to the state of the task set.

Likewise, the third set from above in FIG. 3 indicates (i) a task set of task A and (ii) score 60 corresponding to a predetermined state of the task set.

Task selection answer generator 104 selects a set according to the magnitude of the score (that is, the degree of contribution to the second inference result) from among the sets of task sets and scores as described above, and generates task selection answer data based on the task set of the selected set.

For example, the task set of the uppermost set and the task set of the second set from above each of which has the score of 80 or more in FIG. 3 are selected, and task selection answer data indicating that tasks A and B common between both the task sets are the tasks that should be selected.

It is to be noted that, when integration information includes a plurality of states, task selection answer data may be generated based on sets of task sets and scores associated with states that match predefined states (that are answer data of the states) for sensing data 10 may be generated. For example, in the case where (i) a set of a state where "a human is stretching out to reach and get an object in a kitchen" and score 90 is obtained by integrating the results of inference by tasks A, B, and C, and (ii) a set of a state where "a human stands up and is trying to house an object into a shelf" and score 90 is obtained by integrating the results of inference by tasks A and B, when the predefined state for sensing data 10 is the state where "a human is stretching out to reach and get an object in a kitchen", the set of the task set of tasks A, B, and C and score 90 is obtained.

Task selection answer data is generated according to an output format of the task selection model. In other words, the task selection answer data is generated according to the format of the model selection information that is output by the task selection model.

The model selection information is information indicating at least one task inference model which inputs a feature map and causes inference processing to be executed. The model selection information is information for identifying a task inference model of a task, and includes first information corresponding to the task. For example, the first information may be information indicating the task, and the model which executes the task indicated by the first information is identified.

Task selection answer generator 104 provides task selection model trainer 105 with the generated set of the task selection answer data and the sensing data, as training data.

FIG. 4 is an illustration of one example of training data according to this embodiment. The training data illustrated in FIG. 4 includes sensing data, and task selection answer data that is generated based on the sets of task sets and scores indicated in FIG. 3.

As illustrated in FIG. 4, the training data includes the sensing data and the task selection answer data which is the answer data of the model selection information associated with each other. The sensing data is, for example, image 20 input to training system 1 and sensing data used to generate the answer data of the model selection information. The answer data of the model selection information is answer data generated by task selectin answer generator 104 using the sensing data.

Specifically, FIG. 4 includes image 20 as the sensing data and informtion "A:1, B:1, and C:0" as the answer data of the model selection information associated with each other. This means that the tasks for performing processing of image 20 include tasks A and B, and does not include task C. Here, the model selection information is represented in a format in which the tasks which are included in the tasks for performing processing of image 20 are represented as "1", and the task which is not included in the tasks for performing processing of image 20 is represented as "0". As a matter of course, formats of model selection information are not limited thereto.

Task selection model trainer 105 is a functional unit for training task selection model M1. Task selection model trainer 105 obtains training data generated by task selection answer generator 104 to obtain, from feature quantity extractor 101, a feature map as the feature quantity of the sensing data included in the training data. Task selection model trainer 105 inputs the obtained feature map into task selection model M1 to obtain model selection information as the training model selection information. Task selection model trainer 105 then determines the task selection answer data as reference data, trains task selection model M1 through machine learning in which the model selection information is output data, and outputs task selection model M1.

Task selection model M1 is a model which has been trained using the machine learning, based on (i) at least one inference result obtained by inputting the feature map into the at least one task inference model among the plurality of task inference models held by model library 30 and (ii) the model selection information obtained by inputting the feature map into task selection model M1. Task selection model M1 is, for example, a neural network model, and is one example of a third inference model.

Specifically, task selection model trainer 105 trains, using the training data illustrated in FIG. 4, task selection model M1 so that task selection model M1 outputs the answer data of the model selection information associated with the sensing data in the training data when the sensing data in the training data is input into training system 1. For example, the training of task selection model M1 can be performed by: calculating, by a loss function, the difference between (i) the model selection information that is output when the feature map extracted from sensing data by feature quantity extractor 101 is input into task selection model M1 and (ii) the answer data of the model selection information included in the training data; and adjusting a parameter included in task selection model M1 to decrease the difference.

Task selection model M1 trained by training system 1 as described above is provided to inference system 2, and is used for the inference processing of the sensing data.

Processing executed by training system 1 configured as described above is described hereinafter.

FIG. 5 is a flow chart indicating processing that is executed by training system 1 according to this embodiment.

In Step S1001, feature quantity extractor 101 obtains sensing data 10.

In Step S1002, feature quantity extractor 101 obtains a feature map of sensing data 10 by performing processing of extracting a feature quantity of sensing data 10 obtained in Step S1001.

In Step S1003, inference controller 102 determines task sets for executing inference processing of the feature map obtained in Step S1002. At this time, inference controller 102 determines a plurality of task sets which are at least partly different from each other.

In Step S1004, inference controller 102 executes inference processing using the model which executes the tasks belonging to each of the plurality of task sets determined in Step S1003.

In Step S1005, integrator 103 generates integration information by integrating the inference results indicating the results of the inference processing executed in Step S1004 using the model which executes the tasks belonging to each of the plurality of task sets.

In Step S1006, task selection answer generator 104 generates task selection answer data, based on the integration information generated in Step S1005.

In Step S1007, task selection model trainer 105 trains task selection model M1 by performing machine learning using the task selection answer data generated in Step S1006.

Through the series of processes indicated in FIG. 5, training system 1 trains task selection model M1. Training system 1 provides inference system 2 with trained task selection model M1.

### (1-2) Inference System 2

Next, inference system 2 is described. It is to be noted that substantially the same elements as those in training system 1 are not described repeatedly.

FIG. 6 is a block diagram illustrating a functional configuration of inference system 2 according to this embodiment.

As illustrated in FIG. 6, inference system 2 selects an inference model based on input sensing data 10, and executes inference processing of sensing data 10 by the selected inference model.

As illustrated in FIG. 6, inference system 2 includes feature quantity extractor 201, inference controller 202, task selector 208, model selector 210, and model library 30.

Feature quantity extractor 201 is a functional unit which extracts a feature quantity of sensing data 10 using feature quantity extraction model L1. Feature quantity extractor 201 is a functional unit identical to feature quantity extractor 101 included in training system 1. Feature quantity extractor 201 generates a feature map indicating a feature of input sensing data 10, and provides inference controller 202 and task selector 208 with the generated feature map.

Inference controller 202 is a functional unit which obtains the feature map from feature quantity extractor 201, and executes inference processing of the obtained feature map by the task inference model selected by model selector 210. Inference controller 202 outputs result information 50 indicating the result of the inference processing. Inference controller 202 causes the task inference model selected by model selector 210 to operate before executing the inference processing, and executes the inference processing using the task inference model in operation. Inference controller 202 causes only the task inference model selected by model selector 210 among the task inference models held, when executing the inference processing. The task inference models which have not been selected by model selector 210 are not caused to operate. Result information 50 corresponds to second inference results.

Task selector 208 is a functional unit which selects tasks of task inference model that inference controller 202 uses in the execution of the inference processing. Task selector 208 obtains and holds task selection model M1 that training system 1 has trained. Task selector 208 obtains the feature map from feature quantity extractor 201, generates model selection information for identifying the model which executes the task(s) that should be executed on the feature map, using task selection model M1, and provides model selector 210 with the model selection information.

Model selector 210 is a functional unit which selects task inference model that inference controller 202 uses in the execution of the inference processing.

Model selector 210 obtains the model selection information generated by task selector 208. Model selector 210 then selects the task inference model from model library 30 according to the model selection information obtained, and provides inference controller 202 with the task inference model. Specifically, model selector 210 identifies the task(s) based on first information included in the model selection information, and selects the task inference model which executes the identified task(s).

It is to be noted that model selector 210 may further obtain device information 40 of hardware which causes inference system 2 to operate, specifically the hardware which causes inference controller 202 to operate, and select the task inference model from model library 30, in consideration of obtained device information 40 together with the model selection information. Device information 40 is information including the amount of static calculation resource, available state of current or future calculation resource, or the like. For example, when the spec of the CPU or memory included in the hardware which is causing inference controller 202 to operate is comparatively low, the task inference model having a performance lower than the task inference model indicated by model selection information may be obtained from model library 30.

When selecting the task inference model in consideration of device information 40, model selector 210 determines the upper limit of the amount of calculation by the operable task inference model, based on the information indicating the performance of the task inference model as an operation condition and device information 40. Model selector 210 then selects the task inference model with which the amount of calculation will fall below the upper limit from among task inference models which execute the tasks according to the model selection information.

Model library 30 is a library that holds task inference models which can be used by inference controller 202 to execute inference processing.

It is to be noted that feature quantity extractor 201 corresponds to a first obtainer which inputs sensing data into a first inference model to obtain a first inference result of the sensing data from the first inference model.

Task selector 208 corresponds to a second obtainer which inputs the first inference result into a third inference model to obtain, from the third inference model, the model selection information indicating at least one second inference model that is selected from among a plurality of second inference models.

Inference controller 202 corresponds to (i) a third obtainer which inputs the first inference result into the at least one second inference model indicated by the model selection information to obtain, from the second inference model, at least one second inference result of the first inference result, and (ii) an outputter which outputs the at least one second inference result.

Processing executed by inference system 2 configured as described above is described hereinafter.

FIG. 7 is a flow chart indicating processing that is executed by inference system 2 according to this embodiment.

In Step S2001, feature quantity extractor 201 obtains sensing data 10.

In Step S2002, feature quantity extractor 201 obtains a feature map of sensing data 10 obtained in Step S2001 by performing processing of extracting a feature quantity of sensing data 10.

In Step S2003, task selector 208 obtains the feature map obtained in Step S2002, and obtains model selection information that is output by inputting the obtained feature map into task selection model M1.

In Step S2004, model selector 210 selects the task inference model indicated by the model selection information generated in Step S2003 from among the task inference models held in model library 30, and provides inference controller 102 with the task inference model.

In Step S2005, inference controller 202 inputs the feature map provided from feature quantity extractor 201 into the task inference model provided from model selector 210, and executes inference processing to obtain an inference result. Inference controller 202 outputs the obtained inference result.

Through the series of processes indicated in FIG. 7, inference system 2 is capable of causing the inference model suitable for the inference processing of sensing data 10 to operate and executing the inference processing. At this time, since inference system 2 does not cause the inference models other than the inference model suitable for the inference processing of sensing data 10 to operate, inference system 2 is capable of reducing the calculation resource to be used or the electric power to be consumed.

### [Embodiment 2]

In this embodiment, a performance selection model is trained instead of a task selection model according to Embodiment 1, and an inference model for use in inference processing regarding sensing data is selected using a result of output by the performance selection model. It is to be noted that substantially the same elements as those in Embodiment 1 are not described repeatedly.

### (2-1) Training System 1

FIG. 8 is a block diagram illustrating a configuration of training system 1 which is a processing system in this embodiment.

As illustrated in FIG. 8, training system 1 outputs an inference model (performance selection model M2) for selecting an inference model which executes inference processing of sensing data 10, based on input sensing data 10.

Training system 1 includes feature quantity extractor 301, inference controller 302, integrator 303, performance selection answer generator 306, performance selection model trainer 307, and model library 30.

Feature quantity extractor 301 generates a feature map based on sensing data 10, using feature quantity extraction model L3.

Inference controller 302 controls inference processing using task inference model managed by model library 30, based on the feature map generated. The plurality of task inference models held by model library 30 includes task inference models for executing various tasks and models having various performances. For example, task inference models which execute the same task and have performances different from each other are included in the plurality of task inference models. For example, "model A1" is a model which executes task A and has a comparatively low performance. In addition, "model B2" is a model which executes task B and has a comparatively middle-level performance. Here, although the performances of task inference models are represented using three levels of 1 (low), 2 (middle level), and 3 (high), the ways of representing the performances are not limited thereto.

Inference controller 302 inputs a feature map into each of at least one task inference model having different performances and executes inference processing. For example, inference controller 302 inputs a feature map into each of task inference models A1 to A3, B1 to B3, and C1 to C3 which execute a task for object detection to obtain the inference results. Each of the inference results can be different in, for example, the position, magnitude, or likelihood of an object. It is to be noted that such inference processing may be executed on only one particular performance (for example, only a task inference model having the middle-level performance) among the task inference models having the different performances, or may be executed on all of the task inference models having the different performances.

Integrator 303 generates integration information based on at least one inference result regarding each task. In this embodiment, since a task is not selected unlike Embodiment 1, integration information includes a pair of a state and a score. Integrator 303 selects one of the inference results of task inference models having the different performances, and generates integration information based on the selected inference result. Generation of integration information is the same as in Embodiment 1. It is to be noted that integration information may be generated for only one of the particular performances among the inference results of the task inference models having the different performances, or integration information about all the task inference models having the different performances may be generated. In the case of latter, the integration information includes a set of performances (hereinafter referred to as a performance set). In addition, when the number of tasks is one, the integration information may include an inference result instead of a state.

Performance selection answer generator 306 is a functional unit which generates answer data for use in training of performance selection model M2 (hereinafter also referred to as performance selection answer data, or answer data of model selection information as a generic concept). Performance selection answer data is answer data (reference data) for training performance selection model M2 so that a model having an appropriate performance as a model which executes inference processing of sensing data 10 input to feature quantity extractor 301 is selected. Performance selection answer generator 306 obtains integration information from integrator 303, and generates data for identifying the performance to be required for inference processing is generated as performance selection answer data, based on the obtained integration information.

Specifically, performance selection answer generator 306 generates performance selection answer data for identifying a performance that is lower as the integration information is better and is higher as the integration information is worse. Evaluation as to whether the integration information is better or not may be made based on comparison of answer data of the integration information (for example, answer data that is defined for sensing data 10 in advance), or may be made based on the content of the integration information. Details are described later. Performance selection answer generator 306 provides performance selection model trainer 307 with the generated performance selection answer data.

The task selection answer data is generated so that, for example, the task inference model which satisfies a performance requirement in the at least one second inference result is preferentially included in the at least one task inference model indicated by the training model selection information. More specifically, the performance selection answer data is generated so that the task inference model having a performance according to the degree of difficulty of the processing by the task inference model is preferentially included in the at least one task inference model indicated by the training model selection information.

The performance selection answer data is generated according to the predetermined output format of performance selection model M2. In other words, the performance selection answer data is generated according to the format of the model selection information that is output by performance selection model M2.

The model selection information is information indicating at least one task inference model which inputs a feature map and causes inference processing to be executed. The model selection information is information for identifying a task inference model, and includes second information corresponding to the performance of the task inference model. The second information is, for example, information indicating the performance of the task inference model. Specifically, the information indicating the performance may be precision of the processing by the task inference model, information indicating the speed of the processing by the model, or at least one score of the at least one of the precision or the speed. In addition, the information indicating the performance may include size information indicating the size of a neural network model. The size information may include the number of nodes, the number of branches, the number of layers, or the like of the neural network model.

In addition, the second information may be, for example, information indicating the degree of difficulty of the processing by the task inference model. According to the degree of difficulty, a task inference model having the performance according to the degree of difficulty is selected by model selector 410 to be described later. The information indicating the degree of difficulty is information indicating the degree of difficulty or easiness of the processing. Here, "the processing is difficult" means the precision to be required for the processing is high, the amount of calculation to be required for the processing is large, etc. The degree of difficulty may be represented in a discrete number (0, 1, or the like), or serial values (0 to 1, or the like).

Here, generation of the performance selection answer data is described in detail. It is to be noted that, when the integration information includes an inference result, integration processing may be replaced with inference processing.

For example, when the integration processing is processing for solving a classification problem, the degree of difficulty may be set to high when the classification is wrong (that is, the classification result does not match answer data), or the degree of difficulty may be set to high when at least parts of likelihoods of a plurality of classes are close to each other. It is to be noted that no answer data is used in the latter case.

Alternatively, when the integration processing is processing for solving a regression problem, the degree of difficulty may be set according to the difference between the integration information and the answer data, or the difference as it is may be set as the degree of difficulty. Alternatively, the degree of difficulty may be set to high when the difference exceeds a certain threshold value. It is to be noted that the difference may be calculated simply by subtraction, or by an optional function that takes the subtraction result as an input.

Alternatively, when the integration processing is processing for solving an object detection problem, that is, a combination of a classification problem for a certain detection frame (a problem for classifying a frame) and a regression problem (a problem for determining the coordinates of the frame), the degree of difficulty to be used may be a combination of setting methods in the "classification problem" and the "regression problem" described above. At this time, as for the regression problem part, a value obtained by subtracting an intersection over union (IoU) of the answer frame and the detection frame from 1 (1 - IoU) may be determined as the degree of difficulty. In addition, the degree of difficulty of the object detection problem may be a linear combination or a multiplication of the degree of difficulty of the classification problem and the degree of difficulty of the regression problem.

It is to be noted that, when the number of items of integration information is plural, performance selection answer generator 306 may calculate the degrees of difficulty of the respective items of integration information, integrate the calculated degrees of difficulty, and set one integrated degree of difficulty. For example, when a state included in the integration information matches the state (that is, the answer data of the state) that is predefined for sensing data 10, a count indicating the number of matching states may be incremented, and the degree of difficulty may be set according to the magnitude of the count. For example, performance selection answer data indicating that the degree of difficulty is lower (that is, indicating that the performance is low) as the magnitude of the count is larger (that is the number of matches is larger). In addition, performance selection answer data indicating that the degree of difficulty is higher (that is, indicating that the performance is high) as the magnitude of the count is smaller (that is, the number of matches is smaller).

Performance selection answer generator 306 provides performance selection model trainer 307 with, as training data, the set of the generated performance selection answer data and the sensing data.

FIG. 9 is an illustration of one example of training data according to this embodiment. The training data illustrated in FIG. 9 includes sensing data and performance selection answer data that is generated based on an inference result.

Specifically, FIG. 9 includes image 20 as the sensing data and information "3" as the answer data of the model selection information associated with each other. This means that the performance of the task inference model which performs processing of image 20 is required to be high. Here, the model selection information is represented according to the format in which the performance (or the degree of difficulty) to be required for the task inference model which performs processing of image 20 is represented as one of 1 (low), 2 (middle level), and 3 (high) in three stages. As a matter of course, formats of model selection information are not limited thereto.

Performance selection model trainer 307 is a functional unit which generates performance selection model M2. Performance selection model trainer 307 obtains performance answer data generated by performance selection answer generator 306 to obtain, from feature quantity extractor 301, a feature map as the feature quantity of the sensing data included in the training data. Performance selection model trainer 307 inputs the obtained feature map into performance selection model M2 to obtain model selection information as the training model selection information. Performance selection model trainer 307 then determines the performance selection answer data as reference data, trains performance selection model M2 through machine learning in which the model selection information is output data, and outputs the model selection information. Performance selection model M2 is one example of a third inference model.

Performance selection model trainer 307 trains performance selection model M2 using the training data illustrated in FIG. 9 so that when sensing data included in the training data is input to training system 1, performance selection model M2 outputs answer data of the model selection information associated with the sensing data in the training data. For example, the training of performance selection model M2 can be performed by: calculating, by a loss function, the difference between (i) the model selection information that is output when the feature map extracted from sensing data by feature quantity extractor 301 is input into performance selection model M2 and (ii) the answer data of the model selection information included in the training data; and adjusting a parameter included in performance selection model M2 to decrease the difference.

Performance selection model M2 trained by training system 1 as described above is provided to inference system 2, and is used for the inference processing of the sensing data.

Processing executed by training system 1 configured as described above is described hereinafter.

FIG. 10 is a flow chart indicating processing that is executed by training system 1 according to this embodiment.

In Step S3001, feature quantity extractor 301 obtains sensing data 10.

In Step S3002, feature quantity extractor 301 obtains a feature map of sensing data 10 by performing processing of extracting a feature quantity of sensing data 10 obtained in Step S3001.

In Step S3003, inference controller 302 inputs sensing data 10 into task inference models having mutually different performances held by model library 30, and executes inference processing.

In Step S3004, performance selection answer generator 306 generates performance selection answer data, based on the inference results output in Step S3003.

In Step S3005, performance selection model trainer 307 trains performance selection model M2 by performing machine learning using performance selection answer data generated in Step S3004.

Through the series of processes indicated in FIG. 10, training system 1 trains performance selection model M2. Training system 1 provides inference system 2 with trained performance selection model M2.

### (2-2) Inference System 2

Next, inference system 2 is described.

FIG. 11 is a block diagram illustrating a functional configuration of inference system 2 according to this embodiment.

As illustrated in FIG. 11, inference system 2 includes feature quantity extractor 401, inference controller 402, performance selector 409, model selector 410, and model library 30.

Feature quantity extractor 401 generates a feature map indicating a feature of input sensing data 10, using feature quantity extraction model L3, and provides inference controller 402 and performance selector 409 with the generated feature map.

Performance selector 409 is a functional unit which selects a performance of a task inference model that inference controller 402 uses in the execution of the inference processing. Performance selector 409 obtains performance selection model M2 that training system 1 has trained, and holds trained performance selection model M2. Performance selector 409 obtains a feature map from feature quantity extractor 401, generates model selection information for identifying the performance of a task inference model that should be used for inference processing of the feature map, using performance selection model M2, and provides model selector 410 with the model selection information.

Model selector 410 obtains the model selection information generated by performance selector 409. Model selector 410 then selects the task inference model from model library 30 according to the model selection information obtained, and provides inference controller 402 with the task inference model. Specifically, model selector 410 identifies the performance based on second information included in the model selection information, and selects the task inference model having the identified performance.

It is to be noted that model selector 410 may select the task inference model from model library 30, further in consideration of device information 40 together with the model selection information.

When selecting the task inference model in consideration of device information 40, model selector 410 determines the upper limit of the amount of calculation by the operable task inference model, based on the information indicating the performance of the task inference model as an operation condition and device information 40. Model selector 410 then selects the task inference model with which the amount of calculation will fall below the upper limit from among task inference models which have the performance identified according to the model selection information.

Processing executed by inference system 2 configured as described above is described hereinafter.

FIG. 12 is a flow chart indicating processing that is executed by inference system 2 according to this embodiment.

In Step S4001, feature quantity extractor 401 obtains sensing data 10.

In Step S4002, feature quantity extractor 401 obtains a feature map of sensing data 10 by performing processing of extracting a feature quantity of sensing data 10 obtained in Step S4001.

In Step S4003, performance selector 409 obtains the feature map obtained in Step S4002, and obtains model selection information that is output by inputting the obtained feature map into performance selection model M2.

In Step S4004, model selector 410 selects the task inference model indicated by the model selection information generated in Step S4003 from among the task inference models held in model library 30, and provides inference controller 402 with the task inference model.

In Step S4005, inference controller 402 inputs the feature map provided from feature quantity extractor 401 into the task inference model provided from model selector 410, and executes inference processing to obtain an inference result. Inference controller 402 outputs the obtained inference result.

Through the series of processes indicated in FIG. 12, inference system 2 is capable of causing the inference model suitable for the inference processing of sensing data 10 to operate and executing the inference processing. At this time, since inference system 2 does not cause the inference models other than the inference model suitable for the inference processing of sensing data 10 to operate, inference system 2 is capable of reducing the calculation resource to be used or the electric power to be consumed.

### [Embodiment 3]

In this embodiment, both the task selection model in Embodiment 1 and the performance selection model in Embodiment 2 are trained, and an inference model to be used in the inference processing of sensing data is selected using the results of outputs by the task selection model and the performance selection model. It is to be noted that substantially the same elements as those in Embodiment 1 or 2 are not described repeatedly.

### (3-1) Training System 1

FIG. 13 is a block diagram illustrating a configuration of training system 1 which is a processing system in this embodiment.

As illustrated in FIG. 13, training system 1 outputs inference models (task selection model M1 and performance selection model M2) for selecting an inference model which executes inference processing of sensing data 10, based on input sensing data 10.

Training system 1 includes feature quantity extractor 501, inference controller 502, integrator 503, task selection answer generator 504, task selection model trainer 505, performance selection answer generator 506, and performance selection model trainer 507.

Feature quantity extractor 501 generates a feature map based on sensing data 10, using feature quantity extraction model L5.

Inference controller 502 executes inference processing by inputting a feature map into each of at least one task inference model among task inference models which execute each of tasks included in a task set selected from among a plurality of task sets determined, and have mutually different performances, and executing inference processing.

Integrator 503 obtains integration information based on the inference result (a second inference result) that is output by each of the task inference models. Integration information includes a task set, and a pair of a state that is inferred based on sensing data 10 and a likelihood of the state. It is to be noted that the integration information may include a performance set.

Task selection answer generator 504 generates task selection answer data based on the generated integration information. In addition, task selection answer generator 504 generates training data of task selection model M1, based on the generated task selection answer data.

Task selection model trainer 505 trains task selection model M1 using the generated training data.

Performance selection answer generator 506 generates performance selection answer data based on the generated integration information. Specifically, performance selection answer generator 506 generates performance selection answer data based on the integration information about the task set indicated by the generated task selection answer data. For example, in the case where integration information having a performance of 2 (middle level) is generated when integration information in which a task set indicated by task selection answer data includes task A, B, and C, the state as the result of integration of each of the inference results of models A2, B2, and C2 and the answer data of the state are compared with each other. For example, when the state does not match the answer data, a performance selection answer data indicating 3 (high) is generated assuming that a task inference model having a high performance is required (in other words, the degree of difficulty is high). In addition, performance selection answer generator 506 generates training data of performance selection model M2 based on the generated performance selection answer data. Although the integration information for use in the generation of performance selection answer data is integration information about the task set indicated by the generated task selection answer data in the above description, it is to be noted that integration information for use in the generation of performance selection answer data is not limited thereto, and may be all the items of integration information generated.

Performance selection model trainer 507 trains performance selection model M2 using the generated training data.

Task selection model M1 and performance selection model M2 trained by training system 1 as described above are provided to inference system 2, and are used for the inference processing of the sensing data.

Processing executed by training system 1 configured as described above is described hereinafter.

FIG. 14 is a flow chart indicating processing that is executed by training system 1 according to this embodiment.

In Step S5001, feature quantity extractor 501 obtains sensing data 10.

In Step S5002, feature quantity extractor 501 obtains a feature map of sensing data 10 by performing processing of extracting a feature quantity of sensing data 10 obtained in Step S5001.

In Step S5003, inference controller 502 determines a task set which executes inference processing of the feature map obtained in Step S5002. At this time, inference controller 502 determines a plurality of task sets which are at least partly different from each other.

In Step S5004, inference controller 502 executes inference processing using the model which executes the tasks belonging to each of the plurality of task sets determined in Step S5003.

In Step S5005, integrator 503 generates integration information by integrating the inference results indicating the results of the inference processing executed in Step S5004 using the model which executes the tasks belonging to each of the plurality of task sets.

In Step S5006, task selection answer generator 504 generates task selection answer data, based on the integration information generated in Step S5005.

In Step S5007, task selection model trainer 105 trains task selection model M1 by performing machine learning using the task selection answer data generated in Step S5006.

In Step S5008, performance selection answer generator 506 generates performance selection answer data based on the integration information generated in Step S5005 and the task selection answer data generated in Step S5006.

In Step S5009, performance selection model trainer 507 trains performance selection model M2 by performing machine learning using the performance selection answer data generated in Step S5008.

Through the series of processes indicated in FIG. 14, training system 1 trains task selection model M1 and performance selection model M2. Training system 1 provides inference system 2 with trained task selection model M1 and performance selection model M2.

### (3-2) Inference System 2

Next, inference system 2 is described. It is to be noted that substantially the same elements with those in training system 1 are not described repeatedly.

FIG. 15 is a block diagram illustrating a functional configuration of inference system 2 according to this embodiment.

As illustrated in FIG. 15, inference system 2 includes feature quantity extractor 601, inference controller 602, task selector 608, performance selector 609, model selector 610, and model library 30.

Feature quantity extractor 601 generates a feature map indicating a feature of input sensing data 10, using feature quantity extraction model L5, and provides inference controller 602, task selector 608, and performance selector 609 with the generated feature map.

Model selector 610 obtains model selection information (hereinafter, model selection information 1) generated by task selector 608 and model selection information (hereinafter, model selection information 2) generated by performance selector 609. Model selector 610 then selects the task inference model from model library 30 according to the two items of model selection information obtained, and provides inference controller 602 with the task inference model. Specifically, model selector 610 identifies the task from first information included in model selection information 1, and identifies the performance from second information included in model selection information 2. Model selector 610 selects the identified task inference model which executes the task. It is to be noted that the number of items of model selection information may be one. In that case, the item of model selection information may include first information and second information.

It is to be noted that model selector 610 may select the task inference model from model library 30, further in consideration of device information 40 together with the two items of model selection information.

When selecting the task inference model in consideration of device information 40, model selector 610 determines the upper limit of the amount of calculation by the operable task inference model, based on the information indicating the performance of the task inference model as an operation condition and device information 40. Model selector 610 then selects the task inference model with which the amount of calculation will fall below the upper limit from among task inference models which execute the task identified according to model selection information 1 and have the performance identified according to model selection information 2.

It is to be noted various patterns are possible for model selector 610 to determine which one of model selection information 1, model selection information 2 and device information 40 is prioritized when selecting the task inference model. For example, a task inference model may be selected by prioritizing device information 40, model selection information 1, and model selection information 2 in this listed order.

However, the priority order is not limited thereto. For example, the order may be the listed order of model selection information 2, model selection information 1, and device information 40, or may be the listed order of model selection information 1, model selection information 2, and device information 40.

Processing executed by inference system 2 configured as described above is described hereinafter.

FIG. 16 is a flow chart indicating processing that is executed by inference system 2 according to this embodiment.

In Step S6001, feature quantity extractor 601 obtains sensing data 10.

In Step S6002, feature quantity extractor 601 obtains a feature map of sensing data 10 by performing processing of extracting a feature quantity of sensing data 10 obtained in Step S6001.

In Step S6003, task selector 608 obtains the feature map obtained in Step S6002, and obtains model selection information 1 that is output by inputting the obtained feature map into task selection model M1.

In Step S6004, performance selector 609 obtains the feature map obtained in Step S6002, and obtains model selection information 2 that is output by inputting the obtained feature map into performance selection model M2.

In Step S6005, model selector 610 selects the task inference model indicated by model selection information 1 generated in Step S6003 and model selection information 2 generated in Step S6004 from among the task inference models held in model library 30, and provides inference controller 602 with the task inference model.

In Step S6006, inference controller 602 inputs the feature map provided from feature quantity extractor 601 into the task inference model provided from model selector 610, and executes inference processing to obtain an inference result. Inference controller 602 outputs the obtained inference result.

It is to be noted that Steps S6003 and S6004 may be executed in the inverse order, or may be executed in parallel at the same time.

Through the series of processes indicated in FIG. 16, inference system 2 is capable of causing the inference model suitable for the inference processing of sensing data 10 to operate and executing the inference processing. At this time, since inference system 2 does not cause the inference models other than the inference model suitable for the inference processing of sensing data 10 to operate, inference system 2 is capable of reducing the calculation resource to be used or the electric power to be consumed.

### [Embodiment 4]

In this embodiment, an inference model to be used in inference processing of sensing data is selected using an output result of a feature quantity extraction model instead of the task selection model and the performance selection model. Although an example where the inference model is selected in view of both a task and a performance, it is to be noted that an inference model may be selected in view of only a task or only a performance as in Embodiment 1 or 2.

### (4-1) Training System 1

FIG. 17 is a block diagram illustrating a configuration of training system 1 which is a processing system in this embodiment.

As illustrated in FIG. 17, training system 1 includes feature quantity extractor 701, inference controller 702, integrator 703, task selection answer generator 704, performance selection answer generator 706, and trainer 711.

Training system 1 in this embodiment is different from training system 1 according to Embodiment 3 in the point of not including task selection model trainer 505 and performance selection model trainer 507 in Embodiment 3, but including trainer 711 instead.

In addition, feature quantity extractor 701 is the same as in each of the embodiments in the point of extracting a feature quantity based on sensing data, but has a different feature quantity model that is used to extract the feature quantity. Feature quantity extraction model M3 in this embodiment outputs the feature quantity and the model selection information by inputting the sensing data. It is to be noted that details of feature quantity extraction model M3 is described later.

Hereinafter, trainer 711 is mainly described.

Trainer 711 is a functional unit for training feature quantity extraction model M3. Trainer 711 obtains task selection answer data generated by task selection answer generator 704 and performance selection answer data generated by performance selection answer generator 706, and also obtains sensing data 10. Trainer 711 inputs obtained sensing data 10 into feature quantity extraction model M3 to obtain model selection information as training model selection information. Trainer 711 then determines, as reference data, the task selection answer data and the performance selection answer data, trains feature quantity extraction model M3 through machine learning in which the model selection information is output data, and outputs feature quantity extraction model M3. Here, task selection answer data and performance selection answer data are the same as in Embodiment 3.

The model selection information in this embodiment includes first information and second information. As described above, the first information is information which corresponds to the task, and is information for identifying the task or information for identifying a task inference model which executes the task. In addition, the second information is information which corresponds to the performance, and is information for identifying the performance or information for identifying a model which has the performance.

Feature quantity extraction model M3 is a model which has been trained using machine learning, based on (i) at least one inference result (second inference result) obtained by inputting a feature map that is output by feature quantity extraction model M3 into at least one task inference model among a plurality of task inference models held by model library 30 and (ii) model selection information obtained by inputting sensing data 10 into feature quantity extraction model M3. Feature quantity extraction model M3 is one example of a first inference model.

In response to an input of sensing data 10, feature quantity extraction model M3 outputs a feature quantity and model selection information. Specifically, feature quantity extraction model M3 includes a portion which extracts the feature quantity and a portion which outputs the model selection information in response to the input of the feature quantity extracted. For example, the same feature quantity as the feature quantity to be output to the outside of the model may be input into the portion which outputs the model selection information. Alternatively, a feature quantity (for example, a feature quantity to be output by a middle layer instead of the last layer of the portion which extracts the feature quantity) that is an intermediate product which is not output to the outside of the model may be input.

In the training of feature quantity extraction model M3 using the task selection answer data and the performance selection answer data, trainer 711 determines the portion which extracts the feature quantity as a non-target of the training and determines only the portion which outputs the model selection information as a target of the training. For example, trainer 711 fixes a parameter for the portion which extracts the feature quantity, and updates a parameter for the portion which outputs the model selection information. It is to be noted that, when the portion which outputs the model selection information is trained at the same time of training the portion which extracts the feature quantity, both the parameters may be updated as the targets of the training.

Processing executed by training system 1 configured as described above is described hereinafter.

FIG. 18 is a flow chart indicating processing that is executed by training system 1 according to this embodiment.

A description is mainly given of a different portion of the processing which is executed by training system 1 in this embodiment different from a corresponding portion of the processing which is executed by training system 1 in Embodiment 3.

The processing portion from Steps S7001 to S7007 indicated in FIG. 18 is the same as the processing portion from Steps S5001 to S5006 executed by training system 1 in Embodiment 3 and the processing portion in Step S5008 (see FIG. 14).

In Step S7008, trainer 711 trains feature quantity extraction model M3 by performing machine learning using the task selection answer data generated in Step S7006 and the performance selection answer data generated in Step S7007.

Through the series of processes indicated in FIG. 18, training system 1 trains feature quantity extraction model M3. Training system 1 provides inference system 2 with has trained feature quantity extraction model M3.

### (4-2) Inference System 2

FIG. 19 is a block diagram illustrating a functional configuration of inference system 2 according to this embodiment.

As illustrated in FIG. 19, inference system 2 includes feature quantity extractor 801, inference controller 802, model selector 810, and model library 30.

Feature quantity extractor 801 is a functional unit which outputs a feature quantity and model selection information based on sensing data 10. Specifically, feature quantity extractor 801 inputs sensing data 10 into feature quantity extraction model M3 and generates the feature quantity and the model selection information. The model selection information includes information based on which the task and the performance are identified. Feature quantity extractor 801 provides inference controller 802 with the generated feature quantity (feature map), and provides model selector 810 with the generated model selection information. Accordingly, feature quantity extractor 801 can also be said to be a functional unit which has the functions of feature quantity extractor 601, task selector 608, and performance selector 609 in Embodiment 3.

As in inference controller 802 in Embodiment 3, inference controller 802 obtains a feature map from feature quantity extractor 801, executes inference processing by inputting the obtained feature map into the task inference model selected by model selector 810, and outputs result information 50 (corresponding to a second inference result).

Feature quantity extractor 801 corresponds to a first obtainer which inputs sensing data into a first inference model to obtain, from the first inference model, (i) a first inference result of the sensing data and (ii) model selection information indicating at least one second inference model which is selected from among a plurality of second inference models.

Inference controller 802 corresponds to (i) a second obtainer which inputs the first inference result into the at least one second inference model indicated by the model selection information to obtain, from the at least one second inference model, at least one second inference result of the first inference result and (ii) an outputter which outputs the at least one second inference result.

Processing executed by inference system 2 configured as described above is described hereinafter.

FIG. 20 is a flow chart indicating processing that is executed by inference system 2 according to this embodiment.

A description is mainly given of a different portion of the processing which is executed by inference system 2 in this embodiment different from a corresponding portion of the processing which is executed by inference system 2 in Embodiment 3.

The processing portion of Step S8001 indicated in FIG. 20 is the same as the processing portion of Step S6001 (see FIG. 16) which is executed by inference system 2 in Embodiment 3.

In Step S8002, feature quantity extractor 801 generates a feature map and model selection information by inputting sensing data 10 obtained in Step S8001 into feature quantity extraction model M3.

In Step S8003, model selector 810 selects the task inference model indicated by the model selection information generated in Step S8003 from among the task inference models held in model library 30, and provides inference controller 802 with the task inference model.

In Step S8004, inference controller 802 inputs the feature map provided from feature quantity extractor 801 into the task inference model provided from model selector 810, and executes inference processing to obtain an inference result. Inference controller 802 outputs the obtained inference result.

Through the series of processes indicated in FIG. 20, inference system 2 is capable of causing the inference model suitable for the inference processing of sensing data 10 to operate and executing the inference processing. For this reason, inference system 2 in this embodiment provides similar effects as in inference system 2 in Embodiment 3.

### (Conclusion)

As described above, according to the information processing method in each of Embodiments 1 to 4, since the second inference result is obtained using the at least one second inference model that is selected from among the plurality of second inference models, any second inference model that is not selected among the plurality of second inference models does not operate when obtaining the second inference result. For this reason, it is possible to reduce the calculation resource or the electric power required for the operation of the unselected second inference model. In this way, the above-described information processing method makes it possible to reduce the calculation cost required for the inference processing while enabling inference processing of various inference targets. In addition, the second inference model is selected based on the first inference result obtained by inputting the sensing data, the second inference model is selected substantially based on the feature of the sensing data. Accordingly, it is possible to increase the possibility that an inference model suitable for data which is the inference processing target is selected.

In addition, the use of machine learning makes it easier, than in any other method, to generate the third inference model that performs complex inference processing of selecting the second inference model based on the feature of the sensing data.

In addition, it is possible to train the third inference model without restriction on the format of the training second inference result by generating the data according to the format of the model selection information based on the training second inference result. In other words, it is possible to apply various second inference models which output various second inference results to one or more embodiments of the present disclosure.

In addition, since the second inference model that executes the task that has contributed to the at least one second inference result is preferentially included in the training model selection information as the reference data at the time of the machine learning, it is possible to automatically generate the third inference model which outputs the model selection information based on which the second inference model which executes the task is selected. In addition, effective data for the training of the third inference model among data included in the reference data increases, which increases the efficiency of the training.

In addition, since the second inference model that executes the task belonging to the task set having the score higher than the threshold value is preferentially included in the training model selection information as the reference data at the time of the machine learning, it is possible to approximate the level of the precision, accuracy, or the like of the second inference result by the second inference model that is substantially selected by the third inference model to a predetermined level.

In addition, the second inference model that satisfies the performance requirement is preferentially included in the training model selection information as the reference data at the time of the machine learning, which makes it possible to automatically generate the third inference model which outputs the model selection information based on which the second inference model that satisfies the performance requirement is selected. In addition, effective data for the training of the third inference model among data included in the reference data increases, which increases the efficiency of the training.

In addition, since the second inference model having the performance according to the degree of difficulty is preferentially included in the training model selection information as the reference data at the time of the machine learning, it is possible to approximate the level of the processing performance (in other words, the calculation cost) by the second inference model that is substantially selected by the third inference model to a desired level.

In addition, since the size information of the neural network is used as the performance of the second inference model, the performance of the second inference model can be adjusted more easily.

In addition, since the second inference result is obtained using the at least one second inference model that is selected from among the plurality of second inference models, any second inference model that is not selected among the plurality of second inference models does not operate when obtaining the second inference result. For this reason, it is possible to reduce the calculation resource or the electric power required for the operation of the unselected second inference model. In this way, the above-described information processing method makes it possible to reduce the calculation cost required for the inference processing while enabling inference processing of various inference targets. In addition, since the second inference model is selected substantially based on the sensing data, it is possible to increase the possibility that the inference model suitable for the data that is the inference processing target is selected.

In addition, the use of machine learning makes it easier, than in any other method, to generate, as the first inference model, the inference model that performs complex inference processing of selecting the second inference model based on the feature of the sensing data.

In addition, it is possible to train the first inference model without restriction on the format of the training second inference result by generating the data according to the format of the model selection information based on the training second inference result. In other words, it is possible to apply various second inference models which output various second inference results to any of the embodiments of the present disclosure.

In addition, since the second inference model that executes the task that has contributed to the at least one second inference result is preferentially included in the training model selection information as the reference data at the time of the machine learning, it is possible to automatically generate the first inference model which outputs the model selection information based on which the second inference model which executes the task is selected. In addition, effective data for the training of the first inference model among data included in the reference data increases, which increases the efficiency of the training.

In addition, since the second inference model that executes the task belonging to the task set having the score higher than the threshold value is preferentially included in the training model selection information as the reference data at the time of the machine learning, it is possible to approximate the level of the precision, accuracy, or the like of the second inference result by the second inference model that is substantially selected by the first inference model to a predetermined level.

In addition, the second inference model that satisfies the performance requirement is preferentially included in the training model selection information as the reference data at the time of the machine learning, which makes it possible to automatically generate the first inference model which outputs the model selection information based on which the second inference model that satisfies the performance requirement is selected. In addition, effective data for the training of the first inference model among data included in the reference data increases, which increases the efficiency of the training.

In addition, since the second inference model having the performance according to the degree of difficulty is preferentially included in the training model selection information as the reference data at the time of the machine learning, it is possible to approximate the level of the processing performance (in other words, the calculation cost) by the second inference model that is substantially selected by the first inference model to a desired level.

In addition, since the size information of the neural network is used as the performance of the second inference model, the performance of the second inference model can be adjusted more easily.

Each of the constituent elements in each of the above-described embodiments and variations may be configured in the form of a dedicated hardware product, or may be implemented by executing a software program suitable for the constituent element. Each of the constituent elements may be implemented by means of a program executing unit, such as a CPU and a processor, reading and executing the software program recorded on a recording medium such as a hard disk or a semiconductor memory. Here, the software program for realizing the image processing apparatus according to each of the embodiments and variations is a program described below.

Specifically, the program is a program that causes a computer to execute an information processing method which a processor execute using memory. The information processing method includes: inputting sensing data into a first inference model to obtain a first inference result of the sensing data from the first inference model; inputting the first inference result into a third inference model to obtain, from the third inference model, model selection information indicating at least one second inference model that is selected from among a plurality of second inference models; inputting the first inference result into the at least one second inference model indicated by the model selection information to obtain, from the at least one second inference model, at least one second inference result of the first inference result; and outputting the at least one second inference result.

The program is a program that causes a computer to execute an information processing method which a processor execute using memory. The information processing method includes: inputting sensing data into a first inference model to obtain, from the first inference model, a first inference result of the sensing data and model selection information indicating at least one second inference model that is selected from among a plurality of second inference models; inputting the first inference result into the at least one second inference model indicated by the model selection information to obtain, from the at least one second inference model, at least one second inference result of the first inference result; and outputting the at least one second inference result.

Although the information processing devices according to one or more aspects have been described above, the present invention is not limited to the above embodiments. One or more aspects of the present invention may cover and encompass embodiments that a person skilled in the art may arrive at by adding various kinds of modifications to any of the above embodiments or by optionally combining some of the constituent elements in the embodiments within the scope of the present invention.

Although an example in which the inference processing involves object detection, posture estimation, and attribute determination in each of the above embodiments described above, inference processing is not limited thereto. For example, inference processing may involve scene estimation, segmentation, or estimation of a distance to an object, or the like.

In addition, although an example in which the first information is information indicating a task has been mainly described in each of the above embodiments, first information may be, for example, information indicating a second inference model. Specifically, the information indicating the second inference model which executes the task may be included in model selection information, instead of the information indicating the task which has contributed to the at least one training second inference result. In addition, the information indicating the second inference model which has output the second inference result which has contributed to the at least one training second inference result may be included in the model selection information.

### [Industrial Applicability]

The present invention is applicable to systems for behavior recognition.

### [Reference Signs List]

1 training system
2 inference system
10 sensing data
20 image
30 model library
40 device information
50 result information
101, 201, 301, 401, 501, 601, 701, 801 feature quantity extractor
102, 202, 302, 402, 502, 602, 702, 802 inference controller
103, 303, 503, 703 integrator
104, 504, 704 task selection answer generator
105, 505 task selection model trainer
208, 608 task selector
210, 410, 610, 810 model selector
306, 506, 706 performance selection answer generator
307, 507 performance selection model trainer
409, 609 performance selector
711 trainer
L1, L3, L5, M3 feature quantity extraction model
M1 task selection model
M2 performance selection model

## Claims

1. An information processing method that a processor executes using memory, the information processing method comprising:
inputting sensing data into a first inference model to obtain a first inference result of the sensing data from the first inference model;
inputting the first inference result into a third inference model to obtain, from the third inference model, model selection information indicating at least one second inference model that is selected from among a plurality of second inference models;
inputting the first inference result into the at least one second inference model indicated by the model selection information to obtain, from the at least one second inference model, at least one second inference result of the first inference result; and
outputting the at least one second inference result.

2. The information processing method according to claim 1, wherein the third inference model is a model which:
inputs training sensing data into the first inference model to obtain, from the first inference model, a training first inference result of the training sensing data; and
has been trained using machine learning, based on (i) at least one training second inference result and (ii) training model selection information, (i) the at least one training second inference result being obtained by inputting, for each of the at least one second inference model that is selected from among the plurality of second inference models according to a corresponding one of selection patterns, the training first inference result into the at least one second inference model selected, (ii) the training model selection information being the model selection information obtained by inputting the training first inference result into the third inference model.

3. The information processing method according to claim 2,
wherein training of the third inference model includes training using machine learning in which data generated according to a format of the model selection information based on the at least one training second inference result is reference data and the training model selection information is output data.

4. The information processing method according to claim 3,
wherein the model selection information includes first information corresponding to a task that a second inference model executes,
the at least one second inference model indicated by the model selection information executes the task corresponding to the first information, and
the information processing method further includes generating the reference data in such a manner that a second inference model that executes a task which has contributed to the at least one training second inference result is preferentially included in the at least one second inference model indicated by the training model selection information.

5. The information processing method according to claim 4,
wherein the generating of the reference data includes
generating the reference data in such a manner that a second inference model that executes a task belonging to a task set having a score higher than a threshold value is preferentially included in the at least one second inference model indicated by the training model selection information, the score being based on the at least one training second inference result.

6. The information processing method according to any one of claims 3 to 5,
wherein the model selection information includes second information corresponding to a performance of the at least one second inference model,
the at least one second inference model indicated by the model selection information has a performance corresponding to the second information, and
the generating of the reference data includes
generating the reference data in such a manner that a second inference model that satisfies a performance requirement in the at least one training second inference result is preferentially included in the at least one second inference model indicated by the training model selection information.

7. The information processing method according to claim 6,
wherein the second information includes a degree of difficulty of processing of the at least one second inference model, and
the generating of the reference data includes
generating the reference data in such a manner that a second inference model that has a performance according to the degree of difficulty is preferentially included in the at least one second inference model indicated by the training model selection information.

8. The information processing method according to claim 6,
wherein the at least one second inference model includes a neural network model,
the second information includes size information indicating a size of the neural network model, as the performance of the at least one second inference model, and
the generating of the reference data includes
generating the reference data in such a manner that a second inference model that has the size information included in the second information is preferentially included in the at least one second inference model indicated by the training model selection information.

9. An information processing method that a processor executes using memory, the information processing method comprising:
inputting sensing data into a first inference model to obtain, from the first inference model, a first inference result of the sensing data and model selection information indicating at least one second inference model that is selected from among a plurality of second inference models;
inputting the first inference result into the at least one second inference model indicated by the model selection information to obtain, from the at least one second inference model, at least one second inference result of the first inference result; and
outputting the at least one second inference result.

10. The information processing method according to claim 9, wherein the first inference model is a model which:
inputs training sensing data into the first inference model to obtain, from the first inference model, a training first inference result of the training sensing data and training model selection information; and
has been trained using machine learning based on at least one training second inference result and the training model selection information, the at least one training second inference result being obtained by inputting, for each of the at least one second inference model that is selected from among the plurality of second inference models according to a corresponding one of selection patterns, the training first inference result into the at least one second inference model selected.

11. The information processing method according to claim 10,
wherein training of the first inference model includes training using machine learning in which data generated according to a format of the model selection information based on the at least one training second inference result is reference data and the training model selection information is output data.

12. The information processing method according to claim 11, wherein the model selection information includes first information corresponding to a task that a second inference model executes,
the at least one second inference model indicated by the model selection information executes the task corresponding to the first information, and
the information processing method further includes generating the reference data in such a manner that a second inference model that executes a task which has contributed to a result of the at least one training model second selection information is preferentially included.

13. The information processing method according to claim 12,
wherein the generating of the reference data includes
generating the reference data in such a manner that a second inference model that executes a task belonging to a task set having a score higher than a threshold value is preferentially included in the at least one second inference model indicated by the training model selection information, the score being based on the at least one training second inference result.

14. The information processing method according to any one of claims 11 to 13,
wherein the model selection information includes second information corresponding to a performance of the at least one second inference model,
the at least one second inference model indicated by the model selection information has a performance corresponding to the second information, and
the generating of the reference data includes
generating the reference data in such a manner that a second inference model that satisfies a performance requirement in the at least one training second inference result is preferentially included in the at least one second inference model indicated by the training model selection information.

15. The information processing method according to claim 14,
wherein the second information includes a degree of difficulty of processing of the at least one second inference model, and
the generating of the reference data includes
generating the reference data in such a manner that a second inference model that has a performance according to the degree of difficulty is preferentially included in the at least one second inference model indicated by the training model selection information.

16. The information processing method according to claim 14,
wherein the at least one second inference model includes a neural network model,
the second information includes size information indicating a size of the neural network model, as the performance of the at least one second inference model, and
the generating of the reference data includes
generating the reference data in such a manner that a second inference model that has the size information included in the second information is preferentially included in the at least one second inference model indicated by the training model selection information.

17. An information processing system comprising:
a first obtainer which inputs sensing data into a first inference model to obtain a first inference result of the sensing data from the first inference model;
a second obtainer which inputs the first inference result into a third inference model to obtain, from the third inference model, model selection information indicating at least one second inference model that is selected from among a plurality of second inference models;
a third obtainer which inputs the first inference result into the at least one second inference model indicated by the model selection information to obtain, from the at least one second inference model, at least one second inference result of the first inference result; and
an outputter which outputs the at least one second inference result.

18. An information processing system comprising:
a first obtainer which inputs sensing data into a first inference model to obtain, from the first inference model, a first inference result of the sensing data and model selection information indicating at least one second inference model that is selected from among a plurality of second inference models;
a second obtainer which inputs the first inference result into the at least one second inference model indicated by the model selection information to obtain, from the at least one second inference model, at least one second inference result of the first inference result; and
an outputter which outputs the at least one second inference result.
